# FASCICULE DE BREVET EUROPEEN

(11) **EP 3 586 702 B1**
(45) Date de publication et mention de la délivrance du brevet: **19.01.2022**
(21) Numéro de dépôt: 19182270.9
(22) Date de dépôt: 25.06.2019
(51) Int. Cl.: A47J 43/12, A47J 31/44, A47J 43/07

(54) **DISPOSITIF D'AGITATION ROTATIF DE MACHINE DE PRÉPARATION DE BOISSONS ÉQUIPE D'UN MANCHON D'ACCOUPLEMENT**
DREHBARE RÜHRVORRICHTUNG FÜR GETRÄNKEZUBEREITUNGSMASCHINE MIT KUPPLUNGSHÜLSE
ROTATING STIRRING DEVICE FOR BEVERAGE PREPARATION MACHINE EQUIPPED WITH COUPLING SLEEVE

(30) Priorité: 28.06.2018 FR 1855918
(43) Date de publication de la demande: 01.01.2020
(73) Titulaire: SEB S.A., 69130 Ecully (FR)
(72) Inventeur: MORIN, Gilles, 69290 POLLIONNAY (FR)
(74) Mandataire: SEB Développement

(56) Documents cités:
- EP-A1- 1 093 748
- EP-A2- 2 348 932
- FR-A1- 3 056 896

## Description

### Domaine technique

La présente invention concerne un dispositif d'agitation rotatif avec distribution d'eau chaude et/ou de vapeur, présent notamment dans des machines de préparation de boissons à base de lait chaud ou froid moussé (cappuccino, latté, chocolat, cocktail...) ou à base de crème fouettée (cafés et chocolats spéciaux).

### Etat de la technique

Il est connu des machines de préparation de boissons qui comportent notamment un dispositif d'agitation rotatif, lequel comprend un outil rotatif autour d'un axe vertical et destiné à agiter une préparation contenue dans un récipient et un conduit d'acheminement d'eau chaude et/ou de vapeur vers l'outil rotatif en sorte de diluer et/ou réchauffer ladite préparation dans le récipient en la faisant mousser.

Des exemples d'une telle machine de préparation de boissons sont décrits dans la demande de brevet EP2721980A1, dans la demande de brevet FR 3 056 896 A1 et dans le brevet EP2611342B1.

Dans la demande de brevet EP2721980A1, tout particulièrement, le conduit d'acheminement comporte une partie tubulaire qui s'étend le long de l'axe vertical entre une première extrémité qui est accouplée à l'outil rotatif et une seconde extrémité qui est accouplée de manière amovible à un arbre d'entrainement au moyen d'un dispositif d'accouplement. La possibilité de démonter la partie tubulaire avec l'outil rotatif facilite leur nettoyage sous l'eau ou dans un lave-vaisselle.

Le dispositif d'accouplement mis en œuvre dans cette demande de brevet EP2721980A1 présente divers inconvénients. En effet, l'assemblage et le retrait de la partie tubulaire vis-à-vis de l'arbre d'entraînement nécessitent une manipulation du dispositif d'accouplement, laquelle n'est pas intuitive. Lors de l'assemblage, l'utilisateur peut mal enclencher le dispositif d'accouplement ; durant la rotation, la partie tubulaire peut malencontreusement se détacher de l'arbre d'entraînement. En outre, la pression de l'eau chaude et/ou de la vapeur à l'intérieur de la partie tubulaire peut générer des fuites au niveau du dispositif d'accouplement.

### Résumé de l'invention

La présente invention pallie les inconvénients précités. A cet effet, l'invention concerne un dispositif d'agitation rotatif d'une machine de préparation de boissons selon la revendication 1. Ainsi, l'accouplement de la partie tubulaire avec l'arbre d'entraînement s'effectue tout simplement en les emboîtant l'un dans l'autre par l'intermédiaire du manchon, sans aucune manipulation complémentaire. Inversement, le retrait de la partie tubulaire et de l'outil rotatif s'effectue simplement en tirant sur ladite partie tubulaire, ce qui la dégage de l'arbre d'entrainement. La rotation de l'arbre d'entraînement engendre celle de la partie tubulaire et de l'outil rotatif, par le biais du manchon qui assure la transmission du mouvement de rotation. Avantageusement, le manchon est assujetti à la seconde extrémité de la partie tubulaire, la fixation de manière amovible entre la seconde extrémité de la partie tubulaire et l'arbre d'entraînement étant obtenue en emboîtant ledit arbre d'entraînement dans le manchon. La souplesse du manchon permet avantageusement sa déformation élastique lors de l'emboîtement de l'arbre d'entraînement dans celui-ci, ce qui assure une adhérence et une étanchéité entre le manchon et l'arbre d'entraînement. D'autres mises en œuvre restent toutefois envisageables, par exemple un assujettissement du manchon à l'arbre d'entraînement et un emboîtement de la seconde extrémité de la partie tubulaire avec le manchon.

Le premier dispositif d'accouplement entre la première extrémité de la partie tubulaire et l'outil rotatif peut être de conceptions très variées. Ainsi, le premier dispositif d'accouplement peut assurer un montage permanent entre la première extrémité et l'outil rotatif de sorte qu'ils sont difficilement démontables voire pas du tout, par exemple en réalisant la partie tubulaire et l'outil rotatif au moyen d'une seule et même pièce ou en assemblant la partie tubulaire et l'outil rotatif au moyen de vis de fixation ou d'un collage. Au contraire, ce premier dispositif d'accouplement peut assurer un montage de manière amovible entre la première extrémité et l'outil rotatif, par exemple en les vissant ou en les emboîtant l'un dans l'autre. Le démontage de l'outil rotatif vis-à-vis de la première extrémité de la partie tubulaire sera préférable afin de permettre leur nettoyage indépendamment ou le changement d'outil rotatif, par exemple.

Selon une réalisation du dispositif d'agitation rotatif, le manchon comporte une partie conique qui se déforme élastiquement au passage de l'arbre d'entrainement. Ainsi, la forme conique facilite l'engagement de l'arbre d'entraînement puis son serrage convenable autour de celui-ci une fois l'emboîtement achevé. De préférence, la partie conique s'étend le long de l'axe A sur une longueur L supérieure à 5 mm, de préférence supérieure à 10 mm, ce qui permet de disposer d'une surface de frottement du manchon sur l'arbre d'entraînement suffisante pour garantir l'entrainement en rotation dudit manchon par l'arbre d'entraînement, sans aucune friction. De préférence, la partie conique présente une conicité supérieure à 1%, de préférence comprise entre 1% et 5%, de préférence égale à 2%.

Selon une réalisation du dispositif d'agitation rotatif, le manchon est conçu dans une matière présentant un coefficient de frottement supérieur ou égal à 1. De préférence, la matière est choisie parmi les élastomères, de préférence une matière silicone avec une dureté en Shore A comprise entre 20 et 50.

Selon une réalisation du dispositif d'agitation rotatif, le manchon comporte un système de fixation sur la seconde extrémité de la partie tubulaire. Ce système de fixation assure notamment le blocage en rotation selon l'axe A entre le manchon et la seconde extrémité de la partie tubulaire. De préférence, le système de fixation comporte une collerette qui s'étend radialement à l'axe A et qui est placée dans un logement agencé sur la seconde extrémité de la partie tubulaire. En outre, la collerette comporte au moins un méplat qui coopère avec au moins une paroi du logement.

Selon une réalisation du dispositif d'agitation rotatif, le manchon est logé dans la seconde extrémité de la partie tubulaire. On pourrait envisager des variantes avec un manchon partiellement logé dans la seconde extrémité de la partie tubulaire, voire inversement, un manchon recevant ladite seconde extrémité.

Selon une réalisation du dispositif d'agitation rotatif, le second dispositif d'accouplement comprend un cache configuré pour s'engager sur la seconde extrémité de la partie tubulaire et maintenir en position le manchon vis-à-vis de ladite seconde extrémité. En d'autres termes, le cache bloque la translation selon l'axe A, du manchon vis-à-vis de la seconde extrémité. Cela évite tout risque de détachement du manchon monté sur la seconde extrémité.

Selon une réalisation du dispositif d'agitation rotatif, en la présence d'un cache et d'une collerette tels que précités, ladite collerette est comprimée contre le logement lors de la mise en place du cache sur la seconde extrémité de la partie tubulaire. Cela permet de garantir une étanchéité entre le manchon et la seconde extrémité, en sorte d'éviter les fuites lors de remontées d'eau ou de vapeur sous pression dans la partie tubulaire.

Selon une réalisation du dispositif d'agitation rotatif, le manchon comporte un chanfrein d'entrée. La présence de ce chanfrein d'entrée facilite l'introduction de l'arbre d'entraînement dans le manchon.

Selon une réalisation du dispositif d'agitation rotatif, le dispositif d'agitation rotatif comporte un moteur électrique destiné à entrainer l'arbre d'entraînement.

Selon une réalisation du dispositif d'agitation rotatif, l'arbre d'entrainement comporte une partie creuse d'acheminement d'eau chaude et/ou de vapeur qui communique avec la partie tubulaire lors de leur accouplement. Ainsi l'eau chaude et/ou la vapeur circule dans la partie creuse de l'arbre d'entraînement puis dans la partie tubulaire.

Selon cette réalisation précitée, le dispositif d'agitation rotatif comprend une boite à vapeur comportant une chambre, un canal radial d'entrée vapeur, deux paliers étanches de guidage de l'arbre d'entrainement. En outre, la partie creuse d'acheminement d'eau chaude et/ou de vapeur est configurée pour relier la chambre à la partie tubulaire.

Selon une réalisation du dispositif d'agitation rotatif, le dispositif d'agitation rotatif comprend une butée fixe qui délimite la position d'emboîtement de la seconde extrémité de la partie tubulaire sur l'arbre d'entraînement. En outre, le manchon souple est configuré pour rétracter la seconde extrémité en sorte d'empêcher son contact avec ladite butée fixe une fois l'emboîtement achevé. Ainsi la position d'emboîtement de la partie tubulaire sur l'arbre d'entraînement est définie précisément grâce à la butée et, par ailleurs, la seconde extrémité en rotation ne frotte pas sur cette butée fixe.

### Brève description des figures

La description suivante met en évidence les caractéristiques et avantages de la présente invention. Cette description s'appuie sur des figures, parmi lesquelles :
- Les figures 1 et 2 illustrent deux vues d'ensemble d'un mode de réalisation d'une machine de préparation de boissons comportant un dispositif d'agitation rotatif selon l'invention, suivant deux positions dudit dispositif ;
- La figure 3 illustre une coupe du dispositif d'agitation rotatif mettant notamment en évidence l'assemblage de la partie tubulaire avec l'arbre d'entraînement et le conduit d'acheminement de l'eau chaude et/ou de la vapeur ;
- La figure 4 illustre une coupe de l'accouplement de la seconde extrémité de la partie tubulaire avec l'arbre d'entraînement ;
- La figure 5 illustre l'arbre d'entraînement emboîté dans la seconde extrémité de la partie tubulaire par l'intermédiaire du manchon ;
- La figure 6 à 8 illustrent respectivement le manchon, la seconde extrémité de la partie tubulaire et le cache.

### Description détaillée

Dans la suite de la description, la machine de préparation de boissons est dénommée « machine ».

Dans la suite de la description, les termes « horizontal », « vertical », « inférieur », « supérieur », « longitudinal », « transversal », « haut », « bas », qui pourraient être employés, le seront en considération de la position de la machine reposant sur un plan de travail, en situation d'usage.

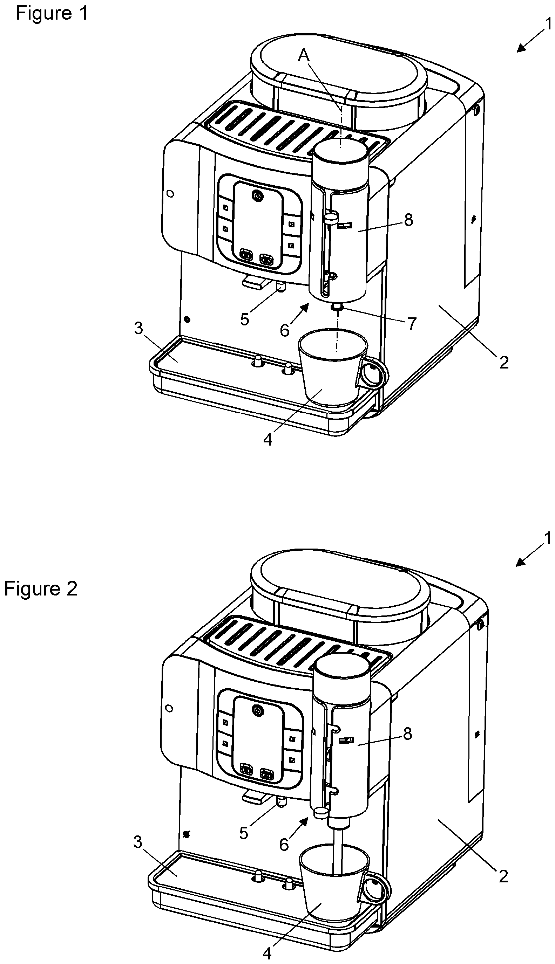

Sur les figures 1 et 2, la machine 1 comporte notamment un bâti 2, un support 3 sur lequel un récipient 4 peut être disposé durant la préparation d'une boisson, et un dispositif de distribution qui comporte notamment une buse 5 permettant la distribution d'une boisson à base de café, de thé et/ou de chocolat, par exemple. Ces caractéristiques sont déjà connues sur les machines de préparation de boissons, elles ne sont donc pas détaillées, l'homme du métier pouvant se référer aux machines existantes.

La machine 1 comprend également un dispositif d'agitation rotatif 6 comprenant un outil rotatif 7 autour d'un axe A et destiné à coopérer avec une préparation contenue dans le récipient 4, par exemple du lait. Cet axe A est défini verticalement sur la machine 1. Le dispositif d'agitation rotatif 6 est monté en translation selon l'axe A, à l'intérieur d'une pièce de guidage 8 agencée sur le bâti 2, de sorte à permettre son déplacement selon une position haute illustrée en figure 1, où l'outil rotatif 7 est dégagé du récipient 4, et une position basse illustrée en figure 2, où l'outil rotatif 7 est inséré dans le récipient 4.

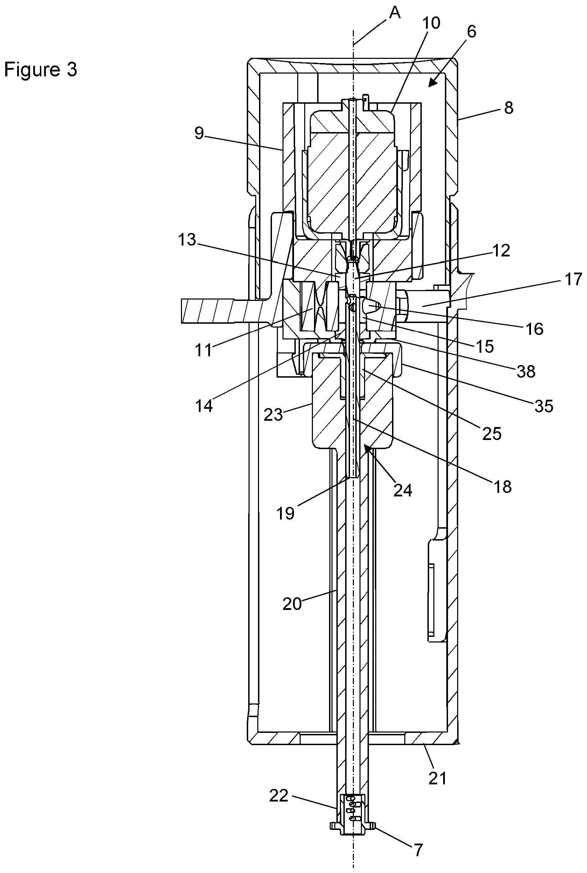

Tel qu'illustré sur la figure 3, le dispositif d'agitation rotatif 6 comporte un corps 9 monté en translation selon l'axe A sur la pièce de guidage 8, au moyen de glissières (non illustrées). A l'intérieur du corps 9 sont agencés un moteur électrique 10 et une boîte à vapeur 11. Le moteur électrique 10 entraîne en rotation selon l'axe A un arbre d'entrainement 12, lequel est monté en liaison pivot d'axe A vis-à-vis de la boîte à vapeur 11 au moyen de deux paliers 13, 14, de roulement étanches, l'étanchéité mise en œuvre entre la boîte à vapeur 11, les paliers 13, 14 et l'arbre d'entraînement 12 permettant de définir une chambre 15. Un canal radial 16 traverse la boîte vapeur 11 et débouche dans la chambre 15, le canal radial 16 étant raccordé à un conduit souple 17 qui permet les déplacements en translation selon l'axe A du dispositif d'agitation rotatif 6 vis-à-vis de la pièce de guidage 8, sans contrainte. Le conduit souple 17 alimente en eau chaude et/ou en vapeur la chambre 15. L'arbre d'entrainement 12 présente une partie creuse 18 s'étendant selon l'axe A et débouchant d'un côté dans la chambre 15 et, de l'autre côté, sur l'extrémité inférieure 19 de l'arbre d'entraînement 12.

Tel qu'illustré sur la figure 3, le dispositif d'agitation rotatif 6 comprend une partie tubulaire 20 qui s'étend selon l'axe A et passe au travers d'un fond 21 de la pièce de guidage 8. L'extrémité inférieure 22 de la partie tubulaire 20 est assemblée avec l'outil rotatif 7, de préférence par emboîtement ou au moyen d'un assemblage à baïonnette. L'extrémité supérieure 23 de la partie tubulaire 20 est accouplée de manière amovible avec l'arbre d'entrainement 12 ; ainsi, le conduit souple 17, le canal radial 16, la chambre
15, la partie creuse 18 de l'arbre d'entraînement 12 et la partie tubulaire 20 définissent un conduit 24 d'acheminement d'eau chaude et/ou de vapeur vers l'outil rotatif 7.

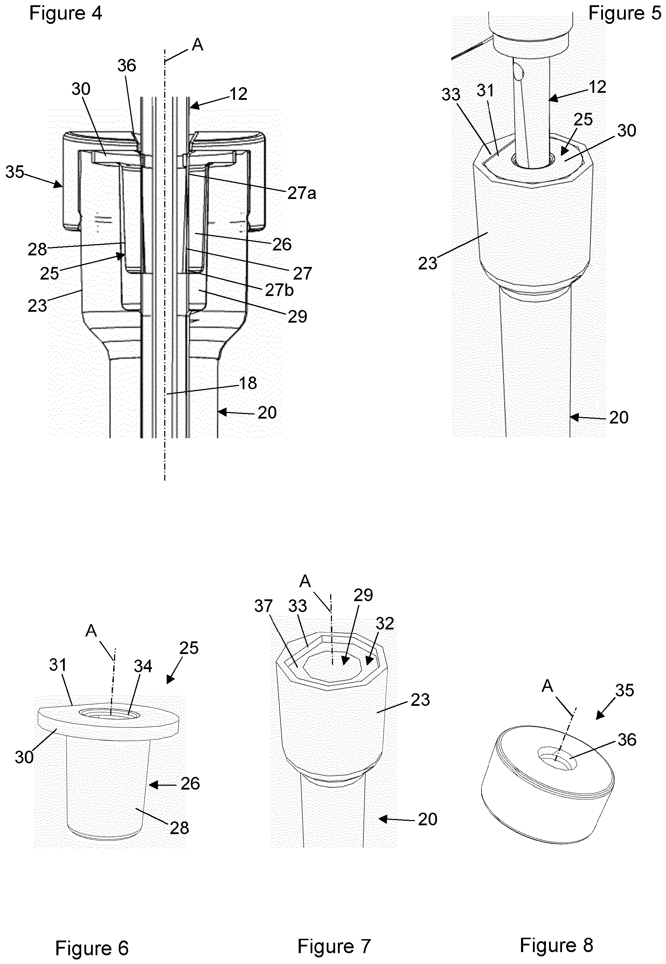

Tel qu'illustré en regard des figures 3 à 7, l'accouplement de l'extrémité supérieure 23 de la partie tubulaire 20 avec l'arbre d'entraînement 12 est mis en œuvre par l'intermédiaire d'un manchon 25 qui présente une forme tubulaire et qui est réalisé dans un matériau souple. De préférence, ce matériau souple est choisi préférentiellement parmi les élastomères, de préférence une matière silicone avec une dureté en Shore A comprise entre 20 et 50 ; ce matériau souple présente en outre un coefficient de frottement supérieur ou égal à 1. Le manchon 25 comprend une partie conique 26 dont la paroi intérieure 27 s'étend sur une longueur L supérieure à 5 mm, de préférence supérieure à 10 mm, afin que la surface de frottement du manchon 25 sur l'arbre d'entraînement 12 soit suffisamment importante pour disposer d'une bonne adhérence, sans risque de friction. Dans ce même objectif, la conicité de la paroi intérieure est supérieure à 1%, de préférence comprise entre 1% et 5%, de préférence égale à 2%. Le diamètre de la paroi intérieure 27 au niveau de son extrémité supérieure 27a est sensiblement identique au diamètre de l'arbre d'entraînement 12, le diamètre de la paroi intérieure 27 se resserrant au niveau de son extrémité inférieure 27b. Ainsi, la partie conique 26 se déforme élastiquement au passage de l'arbre d'entrainement 12 et enserre ce dernier. De préférence, la paroi extérieure 28 de la partie conique 26 présente la même conicité que la paroi intérieure 27, cette conicité facilitant l'insertion du manchon 25 dans une zone de réception 29 agencée au niveau de l'extrémité supérieure 23 de la partie tubulaire 20. Grâce à cette mise en œuvre, l'emboîtement de l'arbre d'entraînement 12 dans le manchon 25 suffit à bloquer la rotation selon l'axe A et à assurer une étanchéité, entre ces deux éléments.

Tel qu'illustré en regard des figures 3 à 8, le manchon 25 comprend une collerette 30 prolongée vers le bas par la partie conique 26. Cette collerette 30 comprend un méplat 31. Un deuxième méplat similaire peut éventuellement être agencé en vis-à-vis dudit méplat 31, selon une variante non illustrée. La zone de réception 29 à l'extrémité supérieure 23 de la partie tubulaire 20 comprend un logement 32 muni d'une paroi 33 formant un méplat interne. Une deuxième paroi similaire peut éventuellement être agencée en vis-à-vis de ladite paroi 33, selon ladite variante non illustrée. La collerette 30 se positionne dans le logement 32 avec le méplat 31 disposé en correspondance avec la paroi 33, lorsque le manchon 25 est inséré dans la zone de réception 29, ce qui bloque la rotation selon l'axe A du manchon 25 vis-à-vis de la partie tubulaire 20. Un chanfrein 34 est prévu sur la collerette 30 en sorte de faciliter l'introduction de l'arbre d'entraînement 12 dans le manchon 25. L'extrémité supérieure 23 de la partie tubulaire 20 est fermée par un cache 35 qui permet de maintenir le manchon 25 logé dans la zone de réception 29, bloquant ainsi sa translation selon l'axe A. Le cache 35 comprend également un chanfrein 36 qui facilite l'introduction de l'arbre d'entrainement 12 dans la partie tubulaire 20. Lorsque le cache 35 est en place, la collerette 30 est légèrement comprimée contre le fond 37 du logement 32, ce qui assure une étanchéité entre le manchon 25 et l'extrémité supérieure 23 de la partie tubulaire 20.

Lors de l'emboîtement de la partie tubulaire 20 sur l'arbre d'entraînement 12, ledit arbre d'entraînement 12 pénètre dans le cache 35 puis dans le manchon 25. Durant la pénétration, la partie conique 26 se déforme élastiquement, l'introduction de l'arbre d'entraînement 12 se poursuivant jusqu'à ce que le cache 35 vienne en appui contre une face inférieure 38 du corps 9 du dispositif d'agitation rotatif 6, formant une butée, ce qui délimite la position d'emboîtement de la partie tubulaire 20 vis-à-vis de l'arbre d'entraînement 12. Lorsque l'utilisateur lâche la partie tubulaire 20 arrivée en butée, la déformation élastique de la partie conique 26 dans le sens de sa longueur définie selon l'axe A, assure une rétractation du cache 35 qui s'écarte légèrement de la face inférieure 38. Ainsi, durant la rotation de l'ensemble (arbre d'entraînement 12, manchon 25, partie tubulaire 20, cache 35 et outil rotatif 7) sous l'action du moteur électrique 10, le cache 35 ne frotte pas sur la face inférieure 38, évitant son usure.

Durant l'utilisation du dispositif d'agitation rotatif 6, l'injection d'eau chaude et/ou de vapeur peut engendrer une montée en pression dans le conduit 24 d'acheminement d'eau chaude et/ou de vapeur. L'étanchéité mise en œuvre entre la partie conique 26 du manchon 25 et l'arbre d'entrainement 12, d'une part, et entre la collerette 30 du manchon 25 et l'extrémité supérieure 23 de la partie tubulaire 20, d'autre part, évite tout risque de fuite d'eau chaude et/ou de vapeur au niveau du raccordement entre la partie tubulaire 20 et l'arbre d'entrainement 12.

La mise en place de la partie tubulaire 20, assemblée avec l'outil rotatif 7, sur l'arbre d'entrainement 12 s'effectue simplement par emboîtement, comme expliqué précédemment. Leur retrait s'effectue également simplement en tirant dessus pour les dégager.

La description qui précède d'un mode préférentiel de réalisation n'est pas limitative, des variantes pouvant être envisagées sans sortir du cadre des revendications.

A titre d'exemple, la machine 1 pourrait comprendre simplement le dispositif d'agitation rotatif 6, la préparation de café, de thé et/ou de chocolat pouvant être réalisée sur une machine de préparation de boissons indépendante disposant uniquement d'un dispositif de distribution de boissons.

Le manchon 25 peut disposer d'un agencement différent, tout en aboutissant au même résultat. On pourrait en effet prévoir d'autres formes du manchon 25 permettant sa fixation sur l'extrémité supérieure 23 de la partie tubulaire 20 et l'emboîtement de l'arbre d'entraînement 12 dans celui-ci, de manière similaire à ce qui précède. On pourrait aussi prévoir des formes du manchon 25 permettant sa fixation sur l'extrémité inférieure 19 de l'arbre d'entraînement 12 et, dans ce cas, l'emboîtement de l'extrémité supérieure 23 de la partie tubulaire 20 sur le manchon 25.

## Revendications

1. Dispositif d'agitation rotatif (6) d'une machine de préparation de boissons (1), ledit dispositif comprenant un outil rotatif (7) autour d'un axe A et destiné à agiter une préparation contenue dans un récipient (4) et un conduit (24) d'acheminement d'eau chaude et/ou de vapeur vers l'outil rotatif, ledit conduit d'acheminement comportant une partie tubulaire (20) qui s'étend le long de l'axe A entre une extrémité inférieure (22) qui est accouplée à l'outil rotatif au moyen d'un premier dispositif d'accouplement et une extrémité supérieure (23) qui est accouplée à un arbre d'entrainement (12) au moyen d'un second dispositif d'accouplement **caractérisé en ce que** le second dispositif d'accouplement comprend un manchon (25) tubulaire souple qui s'étend le long de l'axe A et permet de fixer de manière amovible, par emboîtement, la partie tubulaire (20) avec l'arbre d'entrainement (12).

2. Dispositif d'agitation rotatif (6) selon la revendication 1, caractérisé en ce le manchon (25) comporte une partie conique (26) qui se déforme élastiquement au passage de l'arbre d'entrainement (12).

3. Dispositif d'agitation rotatif (6) selon la revendication 2, **caractérisé en ce que** la partie conique (26) s'étend le long de l'axe A sur une longueur L supérieure à 5 mm, de préférence supérieure à 10 mm.

4. Dispositif d'agitation rotatif (6) selon l'une quelconque des revendications 2 à 3, **caractérisé en ce que** la partie conique (26) présente une conicité supérieure à 1%.

5. Dispositif d'agitation rotatif (6) selon l'une quelconque des revendications 1 à 4, **caractérisé en ce que** le manchon (25) est conçu dans une matière présentant un coefficient de frottement supérieur ou égal à 1, de préférence une matière choisie parmi les élastomères.

6. Dispositif d'agitation rotatif (6) selon l'une quelconque des revendications 1 à 5, **caractérisé en ce que** le manchon (25) comporte un système de fixation sur l'extrémité supérieure (23) de la partie tubulaire (20).

7. Dispositif d'agitation rotatif (6) selon la revendication 6, **caractérisé en ce que** le système de fixation comporte une collerette (30) qui s'étend radialement à l'axe A et qui est placée dans un logement (32) agencé sur l'extrémité supérieure (23) de la partie tubulaire (20), la collerette comportant au moins un méplat (31) qui coopère avec au moins une paroi (33) du logement.

8. Dispositif d'agitation rotatif (6) selon l'une quelconque des revendications 1 à 7, **caractérisé en ce que** le manchon (25) est logé dans l'extrémité supérieure (23) de la partie tubulaire (20).

9. Dispositif d'agitation rotatif (6) selon l'une quelconque des revendications 1 à 8, **caractérisé en ce que** le second dispositif d'accouplement comprend un cache (35) configuré pour s'engager sur l'extrémité supérieure (23) de la partie tubulaire (20) et maintenir en position le manchon (25) vis-à-vis de ladite extrémité supérieure (23).

10. Dispositif d'agitation rotatif (6) selon la revendication 9 rattachée à la revendication 7, **caractérisé en ce que** la collerette (30) est comprimée contre le logement (32) lors de la mise en place du cache (35) sur la seconde extrémité (23) de la partie tubulaire (20).

11. Dispositif d'agitation rotatif (6) l'une quelconque des revendications 1 à 10, **caractérisé en ce que** le manchon (25) comporte un chanfrein (34) d'entrée.

12. Dispositif d'agitation rotatif (6) selon l'une quelconque des revendications 1 à 11, **caractérisé en ce qu'**il comporte un moteur électrique (10) destiné à entrainer l'arbre d'entraînement (12).

13. Dispositif d'agitation rotatif (6) selon l'une quelconque des revendications 1 à 12, **caractérisé en ce que** l'arbre d'entrainement (12) comporte une partie creuse (18) d'acheminement d'eau chaude et/ou de vapeur qui communique avec la partie tubulaire (20) lors de leur accouplement.

14. Dispositif d'agitation rotatif (6) selon la revendication 13, **caractérisé en ce qu'**il comprend une boite à vapeur (11) comportant une chambre (15), un canal radial (16) d'entrée vapeur, deux paliers (13, 14) étanches de guidage de l'arbre d'entrainement (12) et **en ce que** la partie creuse (18) d'acheminement d'eau chaude et/ou de vapeur est configurée pour relier la chambre (15) à la partie tubulaire (20).

15. Dispositif d'agitation rotatif (6) selon l'une quelconque des revendications 1 à 14, **caractérisé en ce qu'**une butée (38) fixe délimite la position d'emboîtement de l'extrémité supérieure (23) de la partie tubulaire (20) sur l'arbre d'entraînement (12), le manchon (25) étant configuré pour rétracter l'extrémité supérieure (23) en sorte d'empêcher son contact avec ladite butée (38) une fois l'emboîtement achevé.

## Patentansprüche

1. Drehrührvorrichtung (6) einer Getränkezubereitungsmaschine (1), wobei die besagte Vorrichtung ein Drehwerkzeug (7) um eine Achse A zum Rühren einer in einem Behälter (4) enthaltenen Zubereitung und eine Leitung (24) zum Transport von heißem Wasser und/oder Dampf zu dem Drehwerkzeug umfasst, wobei die besagte Transportleitung einen rohrförmigen Abschnitt (20) umfasst, der sich entlang der Achse A zwischen einem unteren Ende (22), das mittels einer ersten Kupplungsvorrichtung mit dem Drehwerkzeug gekoppelt ist, und einem oberen Ende (23), das mittels einer zweiten Kupplungsvorrichtung mit einer Antriebswelle (12) gekoppelt ist, erstreckt, **dadurch gekennzeichnet, dass** die zweite Kupplungsvorrichtung eine flexible rohrförmige Hülse (25) umfasst, die sich entlang der Achse A erstreckt und eine lösbare Befestigung des rohrförmigen Abschnitts (20) mit der Antriebswelle (12) mittels Steckverbindung ermöglicht.

2. Drehrührvorrichtung (6) nach Anspruch 1, **dadurch gekennzeichnet, dass** die Hülse (25) einen konischen Abschnitt (26) umfasst, der sich beim Durchgang der Antriebswelle (12) elastisch verformt.

3. Drehrührvorrichtung (6) nach Anspruch 2, **dadurch gekennzeichnet, dass** sich der konische Abschnitt (26) entlang der Achse A über eine Länge L erstreckt, die größer als 5 mm, bevorzugt größer als 10 mm ist.

4. Drehrührvorrichtung (6) nach einem der Ansprüche 2 bis 3, **dadurch gekennzeichnet, dass** der konische Abschnitt (26) eine Konizität von mehr als 1% aufweist.

5. Drehrührvorrichtung (6) nach einem der Ansprüche 1 bis 4, **dadurch gekennzeichnet, dass** die Hülse (25) aus einem Material mit einem Reibungskoeffizienten größer oder gleich 1, bevorzugt aus einem unter den Elastomeren ausgewählten Material, besteht.

6. Drehrührvorrichtung (6) nach einem der Ansprüche 1 bis 5, **dadurch gekennzeichnet, dass** die Hülse (25) am oberen Ende (23) des rohrförmigen Abschnitts (20) ein Befestigungssystem aufweist.

7. Drehrührvorrichtung (6) nach Anspruch 6, **dadurch gekennzeichnet, dass** das Befestigungssystem einen Flansch (30) umfasst, der sich radial zur Achse A erstreckt und in einer Aufnahme (32) angeordnet ist, die am oberen Ende (23) des rohrförmigen Abschnitts (20) angeordnet ist, wobei der Flansch mindestens eine Abflachung (31) umfasst, die mit mindestens einer Wand (33) der Aufnahme zusammenwirkt.

8. Drehrührvorrichtung (6) nach einem der Ansprüche 1 bis 7, **dadurch gekennzeichnet, dass** die Hülse (25) im oberen Ende (23) des rohrförmigen Abschnitts (20) untergebracht ist.

9. Drehrührvorrichtung (6) nach einem der Ansprüche 1 bis 8, **dadurch gekennzeichnet, dass** die zweite Kupplungsvorrichtung eine Abdeckung (35) umfasst, die so konfiguriert ist, dass sie mit dem oberen Ende (23) des rohrförmigen Abschnitts (20) in Eingriff kommt und die Hülse (25) in ihrer Position relativ zu dem besagten oberen Ende (23) hält.

10. Drehrührvorrichtung (6) nach Anspruch 9 in Verbindung mit Anspruch 7, **dadurch gekennzeichnet, dass** der Flansch (30) gegen die Aufnahme (32) gedrückt wird, wenn die Abdeckung (35) auf dem zweiten Ende (23) des rohrförmigen Abschnitts (20) angebracht wird.

11. Drehrührvorrichtung (6) nach einem der Ansprüche 1 bis 10, **dadurch gekennzeichnet, dass** die Hülse (25) eine Anlauffase (34) umfasst.

12. Drehrührvorrichtung (6) nach einem der Ansprüche 1 bis 11, **dadurch gekennzeichnet, dass** sie einen Elektromotor (10) zum Antrieb der Antriebswelle (12) umfasst.

13. Drehrührvorrichtung (6) nach einem der Ansprüche 1 bis 12, **dadurch gekennzeichnet, dass** die Antriebswelle (12) einen hohlen heißwasser- und/oder dampfführenden Abschnitt (18) aufweist, der im gekoppelten Zustand mit dem rohrförmigen Abschnitt (20) in Verbindung steht.

14. Drehrührvorrichtung (6) nach Anspruch 13, **dadurch gekennzeichnet, dass** sie einen Dampfkasten (11) umfasst, der eine Kammer (15), einen radialen Dampfeinlasskanal (16), zwei abgedichtete Lager (13, 14) zum Führen der Antriebswelle (12) umfasst, und dass der hohle heißwasser- und/oder dampfführende Abschnitt (18) so gestaltet ist, dass er die Kammer (15) mit dem rohrförmigen Abschnitt (20) verbindet.

15. Drehrührvorrichtung (6) nach einem der Ansprüche 1 bis 14, **dadurch gekennzeichnet, dass** ein fester Anschlag (38) die Position der Steckverbindung des oberen Endes (23) des rohrförmigen Abschnitts (20) auf der Antriebswelle (12) begrenzt, wobei die Hülse (25) so gestaltet ist, dass sie das obere Ende (23) zurückzieht, um seinen Kontakt mit dem besagten Anschlag (38) zu verhindern, sobald die Steckverbindung abgeschlossen ist.

## Claims

1. Rotating stirring device (6) for a beverage preparation machine (1), said device comprising a tool rotating (7) about an axis A and intended to stir a preparation contained in a container (4) and a conduit (24) for conveying hot water and/or steam to the rotating tool, said conveying conduit comprising a tubular part (20) which extends along the axis A between a lower end (22) which is coupled to the rotating tool by means of a first coupling device and an upper end (23) which is coupled to a drive shaft (12) by means of a second coupling device, **characterised in that** the second coupling device comprises a flexible tubular sleeve (25) which extends along the axis A and allows to removably fix, by interlocking, the tubular part (20) with the drive shaft (12).

2. Rotating stirring device (6) according to claim 1, **characterised in that** the sleeve (25) comprises a conic part (26) which is elastically deformed at the passage of the drive shaft (12).

3. Rotating stirring device (6) according to claim 2, **characterised in that** the conic part (26) extends along the axis A over a length L greater than 5mm, preferably greater than 10mm.

4. Rotating stirring device (6) according to any one of claims 2 to 3, **characterised in that** the conic part (26) has a conicity greater than 1%.

5. Rotating stirring device (6) according to any one of claims 1 to 4, **characterised in that** the sleeve (25) is designed in a material having a friction coefficient greater than or equal to 1, preferably a material chosen from among elastomers.

6. Rotating stirring device (6) according to any one of claims 1 to 5, **characterised in that** the sleeve (25) comprises a fixing system on the upper end (23) of the tubular part (20).

7. Rotating stirring device (6) according to claim 6, **characterised in that** the fixing system comprises a collar (30) which extends radially to the axis A and which is placed in a housing (32) arranged on the upper end (23) of the tubular part (20), the collar comprising at least one plane (31) which engages with at least one wall (33) of the housing.

8. Rotating stirring device (6) according to any one of claims 1 to 7, **characterised in that** the sleeve (25) is housed in the upper end (23) of the tubular part (20).

9. Rotating stirring device (6) according to any one of claims 1 to 8, **characterised in that** the second coupling device comprises a cover (35) configured to be engaged on the upper end (23) of the tubular part (20) and to hold the sleeve (25) in position opposite said upper end (23).

10. Rotating stirring device (6) according to claim 9 connected to claim 7, **characterised in that** the collar (30) is compressed against the housing (32) during the implementation of the cover (35) on the second end (23) of the tubular part (20).

11. Rotating stirring device (6) according to any one of claims 1 to 10, **characterised in that** the sleeve (25) comprises an input chamfer (34).

12. Rotating stirring device (6) according to any one of claims 1 to 11, **characterised in that** it comprises an electric motor (10) intended to drive the drive shaft (12).

13. Rotating stirring device (6) according to any one of claims 1 to 12, **characterised in that** the drive shaft (12) comprises a hollow part (18) for conveying hot water and/or steam which communicates with the tubular part (20) during their coupling.

14. Rotating stirring device (6) according to claim 13, **characterised in that** it comprises a steam box (11) comprising a chamber (15), a steam input radial channel (16), two sealed bearings (13, 14) for guiding the drive shaft (12) and **in that** the hollow part (18) for conveying hot water and/or steam is configured to connect the chamber (15) to the tubular part (20).

15. Rotating stirring device (6) according to any one of claims 1 to 14, **characterised in that** a fixed abutment (38) delimits the interlocking position of the upper end (23) of the tubular part (20) on the drive shaft (12), the sleeve (25) being configured to retract the upper end (23) so as to prevent its contact with said abutment (38) once interlocking is completed.
